(19) **Europäisches Patentamt** / **European Patent Office** / **Office européen des brevets**

(11) **EP 4 356 078 B1**

(12) **EUROPÄISCHE PATENTSCHRIFT**

(45) Veröffentlichungstag und Bekanntmachung des Hinweises auf die Patenterteilung:
**29.10.2025   Patentblatt 2025/44**

(21) Anmeldenummer: **22729608.4**

(22) Anmeldetag: **18.05.2022**

(51) Internationale Patentklassifikation (IPC):
***G01F 1/667*** *(2022.01)*

(52) Gemeinsame Patentklassifikation (CPC):
**G01F 1/667**

(86) Internationale Anmeldenummer:
**PCT/EP2022/063476**

(87) Internationale Veröffentlichungsnummer:
**WO 2022/263088 (22.12.2022 Gazette 2022/51)**

(54) **ANORDNUNG VON ULTRASCHALLWANDLERN, CLAMP-ON-ULTRASCHALL-MESSGERÄT MIT EINER SOLCHEN ANORDNUNG UND VERFAHREN ZUM EINSTELLEN DES ULTRASCHALLMESSGERÄTS**

ARRANGEMENT OF ULTRASONIC TRANSDUCERS, CLAMP-ON ULTRASONIC MEASURING DEVICE HAVING AN ARRANGEMENT OF THIS TYPE, AND METHOD FOR ADJUSTING THE ULTRASONIC MEASURING DEVICE

AGENCEMENT DE TRANSDUCTEURS ULTRASONORES, DISPOSITIF DE MESURE PAR ULTRASONS À SERRAGE DOTÉ D'UN TEL AGENCEMENT, ET PROCÉDÉ DE RÉGLAGE DU DISPOSITIF DE MESURE PAR ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **16.06.2021   DE 102021115546**

(43) Veröffentlichungstag der Anmeldung:
**24.04.2024   Patentblatt 2024/17**

(73) Patentinhaber: **Endress+Hauser Flowtec AG**
**4153 Reinach (CH)**

(72) Erfinder:
• **WIEST, Achim**
**79576 Weil am Rhein (DE)**
• **BEZDEK, Michal**
**4147 Aesch (CH)**
• **WANDELER, Frank**
**5236 Remigen (CH)**

(74) Vertreter: **Endress + Hauser Group Services (Deutschland) AG+Co. KG**
**Colmarer Straße 6**
**79576 Weil am Rhein (DE)**

(56) Entgegenhaltungen:
**DE-A1- 102004 028 215     US-A- 5 546 813**
**US-A1- 2015 355 002**

**Beschreibung**

Die Erfindung betrifft eine Anordnung von Ultraschallwandlern, ein Clamp-On-Ultraschall-Messgerät zum Messen einer Messgröße eines in einem Messrohr befindlichen Mediums mit einer solchen Anordnung und ein Verfahren zum Einstellen des Ultraschallmessgeräts.

Ultraschallwandler von Clamp-On-Ultraschall-Messgeräten werden dazu genutzt Ultraschallsignale auszusenden und zu empfangen, um beispielsweise aus einer Signallaufzeit der Ultraschallsignale oder einer Laufzeitdifferenz zweier gegensätzlich laufender Ultraschallsignale eine Aussage zu einer Eigenschaft eines in einem Messrohr befindlichen Medium treffen zu können, siehe dazu beispielsweise die DE10254053A1.

Die US 5 546 813 A offenbart ein Ultraschall-Messgerät, welches durch eine Vielzahl an Ultraschallwandlerpaaren mit überkreuzten Schallpfaden mehr Informationen über das Strömungsprofil des Mediums zu erlangen.

Problematisch an typischen Clamp-On-Ultraschall-Messgeräten und den zuvor angeführten Ultraschall-Messgeräten ist, dass Ultraschallsignale an verschiedenen Grenzflächen Signalreflektionen verursachen, die auch bei einem empfangenden Ultraschallwandler eintreffen und das eigentliche Messsignal überlagern.

Aufgabe der Erfindung ist es daher, den Einfluss von solchen störenden Signalreflektionen zu minimieren.

Die Aufgabe wird gelöst durch eine Anordnung gemäß dem unabhängigen Anspruch 1, durch ein Clamp-On-Ultraschall-Messgerät gemäß dem unabhängigen Anspruch 7 sowie durch ein Verfahren gemäß dem unabhängigen Anspruch 8.

Eine erfindungsgemäße Anordnung von Ultraschallwandlern eines Clamp-On-Ultraschall-Messgeräts zum Messen einer Messgröße eines durch ein Messrohr strömenden Mediums, wobei die Ultraschallwandler auf dem Messrohr angeordnet sind, umfasst:

zumindest ein Paar auf dem Messrohr angeordnete Ultraschallwandler zum insbesondere wechselseitigen Aussenden und Empfangen von Ultraschallsignalen, wobei die Ultraschallwandler in einer Messanordnung bzgl. einer Messrohrachse einen axialen Anordnungsabstand zueinander aufweisen,

wobei die Ultraschallwandler jeweils eine Wandlervorrichtung mit einer Wandlerlängsachse zum Erzeugen und Erfassen von Ultraschallsignalen sowie einen Koppelkörper zum Übertragen der Ultraschallsignale zwischen Wandlervorrichtung und Messrohr aufweisen,

wobei die Wandlervorrichtungen jeweils mit einem zugehörigen Koppelkörper über eine wandlerseitige Koppelfläche des Koppelkörpers akustisch und mechanisch verbunden sind, wobei die Wandlervorrichtungen jeweils eine dem zugehörigen Koppelelement zugewandte Seite mit einem Kontaktflächenbereich aufweisen, wobei die Kontaktflächenbereiche jeweils einen Flächenbereichsschwerpunkt aufweisen,

wobei eine aussendende Wandlervorrichtung dazu eingerichtet ist, ein Ultraschallsignalfeld zu erzeugen, welches Ultraschallsignalfeld im Koppelkörper eine erste Längsachse insbesondere parallel zur Wandlerlängsachse aufweist, wobei das Ultraschallsignalfeld im Medium einen Öffnungswinkel in einer Messrohrlängsschnittsebene durch die Flächenbereichsschwerpunkte aufweist,

wobei die erste Längsachse einen Referenzsignalpfad mit einer Referenzanordnung für die Ultraschallwandler definiert und Teil dieses Referenzsignalpfads ist sowie einen Längsachsenwinkel zu einer Normalen einer Messrohrwandung aufweist, wobei der Referenzsignalpfad einen axialen Referenzabstand zwischen den Flächenbereichsschwerpunkten bzgl. der Referenzanordnung definiert,

wobei in der Messanordnung ein Messpfad zwischen den Flächenbereichsschwerpunkten verläuft, wobei der axiale Anordnungsabstand durch die Flächenbereichsschwerpunkte bemessen ist,

wobei die Koppelkörper jeweils über eine Koppelfläche akustisch und mechanisch mit dem Messrohr verbunden sind,

wobei der Anordnungsabstand kleiner ist als der Referenzabstand, wobei eine Solldifferenz zwischen Referenzabstand und Anordnungsabstand abhängig ist von zumindest folgendem Merkmal: Öffnungswinkel des Ultraschallsignalfelds im Medium.

Der Öffnungswinkel kann dabei beispielsweise durch eine Formel berechnet bzw. angegeben werden, in welcher beispielsweise eine Wellenlänge des Ultraschallsignals im Medium sowie eine Seitenlänge des Wandlerelements herangezogen werden. Der Fachmann kann auch andere oder weitere Messgrößen dazu heranziehen.

Beispielsweise kann der Öffnungswinkel aber auch durch Kalibrationsmessungen bestimmt werden.

Es hat sich gezeigt, dass durch eine Messanordnung mit einem Anordnungsabstand kleiner dem Referenzabstand störende Einflüsse beispielsweise durch Signalreflektionen reduziert werden und somit eine Signalauswertung vereinfacht wird.

Ein Kontaktflächenbereich kann beispielsweise einfach eine Kontaktfläche sein, wie beispielsweise bei einem einstückigen Piezoelement. Die Kontaktfläche kann beispielsweise eine Ausformung wie beispielsweise eine Kreisform oder ein regelmäßiges Vieleck annehmen, ist aber nicht darauf beschränkt. Der Kontaktflächenbereich kann aber auch durch mehrere nicht zusammenhängende Kontaktflächen aufgespannt werden. Der Flächenbereichsschwerpunkt kann auch außerhalb einer Kontaktfläche liegen.

Die Wandlervorrichtung kann dabei beispielsweise scheibenförmig sein. Sie kann jedoch auch beispielsweise blockförmig sein. Die Wandlervorrichtung kann einstückig oder aus mehreren Komponenten zusammengesetzt sein.

Erfindungsgemäß bedingt ein Ultraschallsignal Echopfade in der Messrohrwand, welche einen gemeinsamen Endpunkt mit dem Referenzsignalpfad aufweisen,

wobei ein empfangender Ultraschallwandler in der Messanordnung zumindest einen ersten Echopfad auf einer dem empfangenden Ultraschallwandler zugewandten Seite des Messrohrs mit zwei Reflektionen in der Messrohrwandung und insbesondere mindestens einen zweiten Echopfad mit vier Reflektionen in der Messrohrwandung ausblendet.

Auf diese Weise wird ein wesentlicher Störeinfluss ausgeblendet und Messeigenschaften der Messanordnung verbessert. Ausblenden eines Echopfads schließt nicht aus, dass Randbereiche von Echosignalen durch einen empfangenden Ultraschallwandler aufgenommen werden. Der Begriff Echopfad bezieht sich dabei auf einen zentralen Bereich maximaler Echoamplitude eines Echosignals.

In einer Ausgestaltung ist der Öffnungswinkel im Medium durch einen Amplitudenabfall gegenüber einer Maximalamplitude um 20 Dezibel definiert,

wobei der Referenzpfad im Medium einen ersten Winkel zur Normalen der Messrohrwandung aufweist, wobei der Messpfad im Medium einen zweiten Winkel zur Normalen der Messrohrwandung aufweist, wobei ein Betrag des zweiten Winkels kleiner ist als der erste Winkel,

wobei eine Winkeldifferenz den Öffnungswinkel multipliziert mit einem Faktor F beträgt,

wobei F höchstens 1.5 und insbesondere höchstens 1.2 und bevorzugt höchstens 1 beträgt.

Es hat sich gezeigt, dass auf diese Weise ein empfangender Ultraschallwandler in einem Randbereich des Ultraschallsignalfelds ein ausreichend gutes Ultraschallsignal empfängt und von einer Minimierung der Störeinflüsse profitiert.

In einer Ausgestaltung beträgt die Solldifferenz mindestens 1 Millimeter und insbesondere mindestens 2 Millimeter und bevorzugt mindestens 3 Millimeter. Auf diese Weise ist eine Mindestwirkung der Erfindung sichergestellt.

In einer Ausgestaltung ist der Öffnungswinkel des Ultraschallsignalfelds kleiner ist als 2 Mal der erste Winkel.

In einer Ausgestaltung weist die Wandlervorrichtung zumindest ein Piezoelement auf.

In einer Ausgestaltung ist der Öffnungswinkel im Medium berechenbar durch folgende Formel:

$$Ö = \arcsin(0.87 * W / S)$$

mit W als Wellenlänge einer Zentralfrequenz des Ultraschallsignals im Medium und S als Seitenlänge der Wandlervorrichtung in einer Messrohrlängsschnittsebene.

Ein erfindungsgemäßes Clamp-On-Ultraschall-Messgerät zum Messen einer Messgröße eines in einem Messrohr befindlichen Mediums umfasst

eine erfindungsgemäße Anordnung,

und eine elektronische Mess-/Betriebsschaltung zum Betreiben der Ultraschallwandler sowie zum Bereitstellen und Ausgeben von Messwerten der Messgröße.

Bei einem erfindungsgemäßen Verfahren zum Einstellen eines erfindungsgemäßen Ultraschall-Messgeräts,
werden in einem ersten Verfahrensschritt zumindest folgende Größen herangezogen, um den Referenzsignalpfad bzw. Referenzabstand zu bestimmen:

jeweilig zumindest eine Schallgeschwindigkeit von Koppelkörper, Messrohrwandung, Medium,

Winkel zwischen erster Längsachse und einer Normalen zur Messrohrwandung, eine Dicke einer Messrohrwandung, ein Durchmesser des Messrohrs, Anzahl von Ultraschallsignaltraversen im Messrohr,

wobei in einem zweiten Verfahrensschritt zumindest eine der folgenden herangezogen Größen wird, um die Solldifferenz zu bestimmen:

Öffnungswinkel im Medium,

wobei in einem dritten Verfahrensschritt die Ultraschallwandler eines Paars gemäß den Ergebnissen des ersten Verfahrensschritts und des zweiten Verfahrensschritts am Messrohr angeordnet werden.

In einer Ausgestaltung führt die elektronische Mess-/Betriebsschaltung den ersten Verfahrensschritt und den zweiten Verfahrensschritt durch und stellt einem Bediener Informationen zum Ausführen des dritten Verfahrensschritts bereit.

In einer Ausgestaltung stellt der Bediener der elektronischen Mess-/Betriebsschaltung Informationen zum Ausführen des ersten Verfahrensschritts bereit.

Im Folgenden wird die Erfindung anhand von Ausführungsbeispielen beschrieben.

Fig. 1 skizziert beispielhafte Anordnungen eines Ultraschallwandlerpaars an einem Messrohr;
Fig. 2 skizziert ein beispielhaftes Clamp-On-Ultraschall-Messgerät;
Fig. 3 skizziert ein beispielhaftes erfindungsgemäßes Verfahren zum Einrichten eines Clamp-On-Ultraschall-Messgeräts.

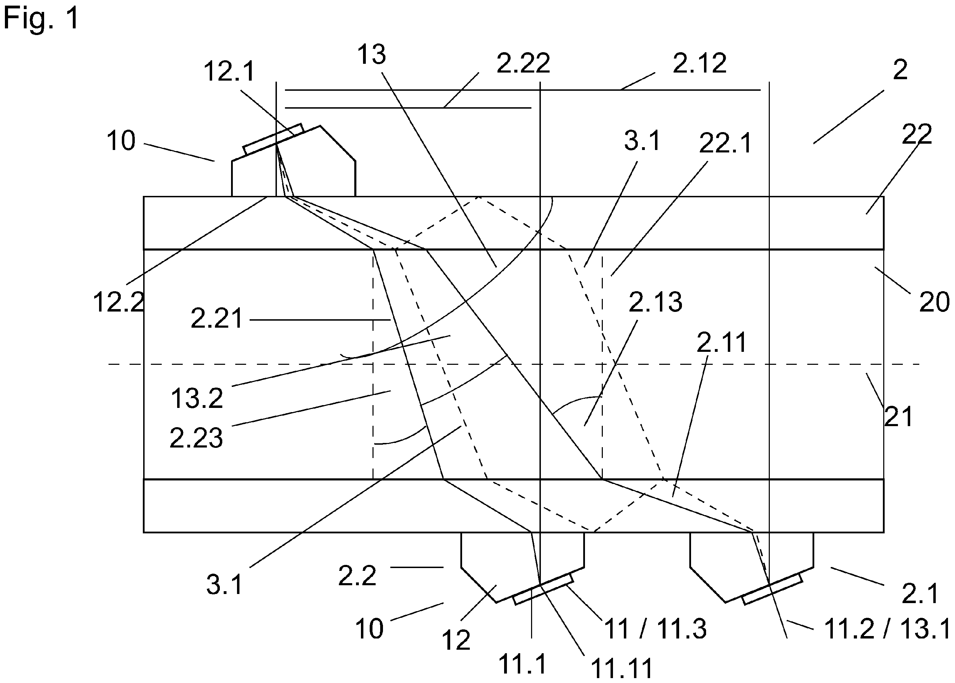

Fig. 1 skizziert den Aufbau und die Funktionsweise zweier Anordnungen 2 eines Paars beispielhafter Clamp-On-Ultraschallwandler 10, welche an einer Außenseite eines Messrohrs 20 angeordnet sind. Die Ultraschallwandler weisen jeweils eine scheibenförmige Wandlervorrichtung 11 und einen Koppelkörper 12 auf, wobei die Wandlervorrichtung über eine Kontaktflächenbereich 11.1 mit einer wandlerseitigen Koppelfläche 12.1 des Koppelkörpers akustisch und mechanisch verbunden ist. Die Kontaktflächenbereiche weisen jeweils einen Flächenbereichsschwerpunkt 11.11 auf.

Ein Kontaktflächenbereich kann beispielsweise einfach eine Kontaktfläche sein, wie beispielsweise bei einem einstückigen Piezoelement. Die Kontaktfläche kann beispielsweise eine Ausformung wie beispielsweise eine Kreisform oder ein regelmäßiges Vieleck annehmen, ist aber nicht darauf beschränkt. Der Kontaktflächenbereich kann aber auch durch mehrere nicht zusammenhängende Kontaktflächen aufgespannt werden. Der Flächenbereichsschwerpunkt kann auch außerhalb einer Kontaktfläche liegen.

Die Wandlervorrichtung kann beispielsweise auch blockförmig sein. Die Wandlervorrichtung kann einstückig oder aus mehreren Komponenten zusammengesetzt sein.

Eine erste Anordnung entspricht einer Referenzanordnung 2.1, und eine zweite Anordnung entspricht einer erfindungsgemäßen Messanordnung 2.2. Die Referenzanordnung entspricht dabei einer Anordnung gemäß dem Stand der Technik, wobei ein empfangender Ultraschallwandler ein Ultraschallsignal entlang eines Referenzsignalpfads 2.11 aufgreift. Der Referenzsignalpfad ist dadurch gekennzeichnet, dass er entlang einer ersten Längsachse eines Ultraschallsignalfelds im Koppelkörper, also entlang eines Bereichs maximaler Ultraschallsignalamplitude verläuft.

Typischerweise verläuft die erste Längsachse 13.1 wie dargestellt entlang einer Wandlerlängsachse 11.2 ausgehend vom Flächenbereichsschwerpunkt 11.11.

Die Referenzanordnung weist dabei einen axialen Referenzabstand 2.12 auf, welcher parallel zu einer Messrohrachse 21 zwischen den Flächenbereichsschwerpunkten 11.11 der Kontaktflächen der Wandlervorrichtungen der Ultraschallwandler bemessen ist. Entsprechend weist eine Messanordnung einen axialen Anordnungsabstand 2.22 auf.

Problematisch an der Referenzanordnung ist beispielsweise, dass nicht nur das Ultraschallsignal selbst, sondern auch Reflektionen des Ultraschallsignals an verschiedenen Grenzflächen über Echopfade zu einem empfangenden Ultraschallwandler gelangen und somit das Ultraschallsignal in störender Weise überlagern. Echopfade sind in beispielhafter Weise dargestellt durch die gestrichelten Linien, bei welchen in einer Messrohrwandung 22 des Messrohrs zwei Reflektionen an Messrohrgrenzflächen stattfinden. Es existieren auch weitere Echopfade mit mehr als zwei Reflektionen.

Erfindungsgemäß ist der axiale Anordnungsabstand 2.22 betragsmäßig kleiner als der Referenzabstand 2.21, wobei eine Solldifferenz zwischen Referenzabstand und Anordnungsabstand abhängig ist von zumindest folgendem Merkmal:
Öffnungswinkel des Ultraschallsignalfelds im Medium.

Auf diese Weise lässt sich der Einfluss von Störeinflüssen wie reflektierte Ultraschallsignale über Echopfade verringern. Die Relevanz von Echopfaden in Bezug auf ihren Störcharakter wird mit zunehmendem Öffnungswinkel des Ultraschallsignalfelds größer. Als einfache Größe bietet sich der Öffnungswinkel des Ultraschallsignalfelds im Medium an, da im Medium das Ultraschallsignalfeld im Wesentlichen durch einen Fernfeldcharakter definiert ist. Als Maß für den Öffnungswinkel kann dabei beispielsweise eine Formel herangezogen werden, in welcher beispielsweise eine Wellenlänge des Ultraschallsignals im Medium sowie eine Seitenlänge des Wandlerelements herangezogen werden. Der Fachmann kann auch andere oder weitere Messgrößen dazu heranziehen. Beispielsweise kann der Öffnungswinkel aber auch durch Kalibrationsmessungen bestimmt werden.

In einer Ausgestaltung ist der Öffnungswinkel 13.2 im Medium durch einen Amplitudenabfall gegenüber einer Maximalamplitude um 20 Dezibel definiert, wobei der Referenzsignalpfad 2.11 im Medium einen ersten Winkel 2.13 zur Normalen der Messrohrwandung aufweist, wobei der Messpfad 2.21 im Medium einen zweiten Winkel 2.23 zur Normalen der Messrohrwandung aufweist, wobei ein Betrag des zweiten Winkels kleiner ist als der erste Winkel, wobei eine Winkeldifferenz zwischen dem ersten Winkel und dem zweiten Winkel den Öffnungswinkel multipliziert mit einem Faktor F beträgt, wobei F höchstens 1.5 und insbesondere höchstens 1.2 und bevorzugt höchstens 1 beträgt. Es hat sich gezeigt, dass auf diese Weise ein empfangender Ultraschallwandler in einem Randbereich des Ultraschallsignalfelds ein ausreichend starkes Ultraschallsignal empfängt und von einer Minimierung der Störeinflüsse profitiert.

In einer Ausgestaltung beträgt die Solldifferenz mindestens 1 Millimeter und insbesondere mindestens 2 Millimeter und bevorzugt mindestens 3 Millimeter. Dadurch ist eine Mindestwirkung des erfindungsgemäßen Effekts sichergestellt.

In einer Ausgestaltung blendet wie in Fig. 1 dargestellt ein empfangender Ultraschallwandler in der Messanordnung zumindest einen ersten Echopfad 3.1 auf einer dem empfangenden Ultraschallwandler zugewandten Seite des Messrohrs mit zwei Reflektionen in der Messrohrwandung und insbesondere mindestens einen zweiten Echopfad (nicht dargestellt) mit vier Reflektionen in der Messrohrwandung aus. Auf diese Weise wird ein wesentlicher Störeinfluss ausgeblendet und Messeigenschaften der Messanordnung verbessert.

Die Wandlervorrichtung 11 kann beispielsweise zumindest ein Piezoelement 11.3 aufweisen.

Der Öffnungswinkel 11.3 im Medium ist berechenbar bzw. bemessbar durch folgende Formel: Öffnungswinkel = $\arcsin(0.87 * W / S)$ mit W als Wellenlänge einer Zentralfrequenz des Ultraschallsignals im Medium und S Seitenlänge der Wandlervorrichtung in einer Messrohrlängsschnittsebene und einer Definition durch einen Amplitudenabfall gegenüber einer Maximalamplitude um 20 Dezibel.

Bei einer Referenzanordnung sowie Messanordnung mit mehr als einer Ultraschallsignaltraverse im Messrohr gilt bislang gesagtes, wobei sich die Solldifferenz um einen Faktor entsprechend einer Traversenzahl vervielfacht.

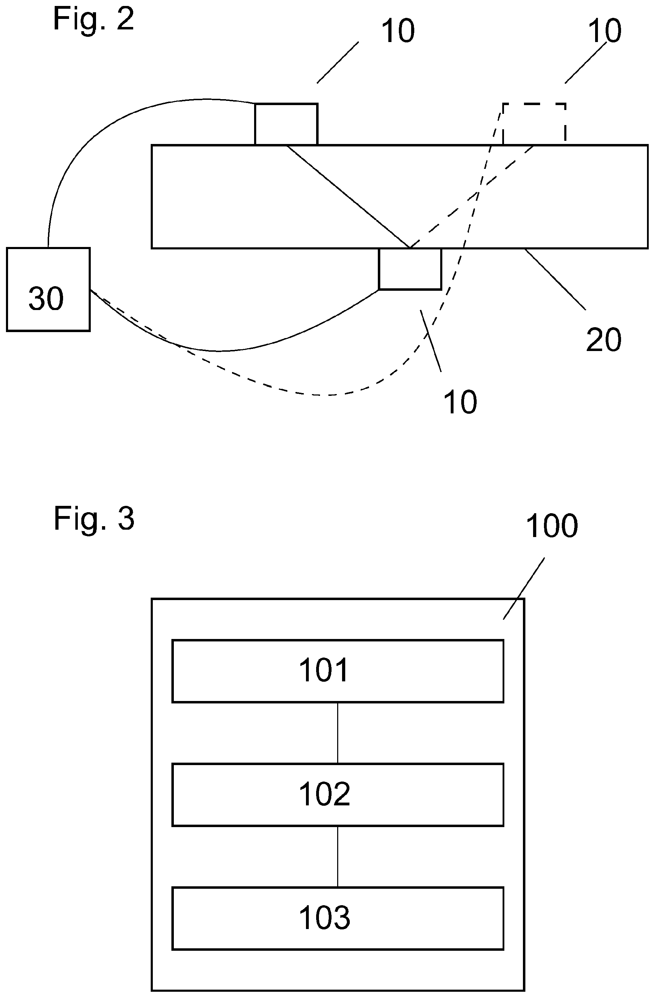

Fig. 2 skizziert ein schematisches beispielhaftes Clamp-On-Ultraschallmessgerät mit einem Messrohr 20 und zwei Ultraschallwandlern 10 in einer Eintraversenanordnung bzw. in einer Zweitraversenanordnung (gestrichelt) und einer elektronischen Mess-/Betriebsschaltung 30 zum Betreiben der Ultraschallwandler sowie zum Bereitstellen und Ausgeben von Messwerten einer Messgröße. Die Messgröße kann beispielsweise eine Schallgeschwindigkeit oder eine Durchflussgeschwindigkeit bzw. Volumendurchfluss eines Mediums im Messrohr sein. Es sind auch Clamp-On-Ultraschallmessgerät mit mehr als zwei Traversen nutzbar.

Fig. 3 skizziert ein erfindungsgemäßes Verfahren 100 zum Einstellen des Clamp-On-Ultraschallmessgeräts bzw. der Anordnung der Ultraschallwandler am Messrohr.

In einem ersten Verfahrensschritt 101 werden zumindest folgende Größen herangezogen, um den Referenzsignalpfad bzw. Referenzabstand zu bestimmen: jeweilig zumindest eine Schallgeschwindigkeit von Koppelkörper, Messrohrwandung, Medium,

Winkel zwischen erster Längsachse und einer Normalen zur Messrohrwandung, eine Dicke einer Messrohrwandung, ein Durchmesser des Messrohrs, Anzahl von Ultraschallsignaltraversen im Messrohr.

Unter Anwendung des Snelliusschen Brechungsgesetz kann somit der Verlauf des Referenzsignalpfads bestimmt werden.

In einem zweiten Verfahrensschritt 102 wird zumindest der Öffnungswinkel im Medium herangezogen, um die Solldifferenz zu bestimmen, wobei in einem dritten Verfahrensschritt 103 die Ultraschallwandler eines Paars gemäß den Ergebnissen des ersten Verfahrensschritts und des zweiten Verfahrensschritts am Messrohr angeordnet werden.

In einer Ausgestaltung des Verfahrens führt die elektronische Mess-/Betriebsschaltung 30 den ersten Verfahrensschritt und den zweiten Verfahrensschritt durch und stellt einem Bediener Informationen zum Ausführen des dritten Verfahrensschritts bereit.

In einer Ausgestaltung des Verfahrens stellt der Bediener der elektronischen Mess-/Betriebsschaltung 30 benötigte Informationen zum Ausführen des ersten Verfahrensschritts bereit. Informationen sind dabei beispielsweise eine typische Schallgeschwindigkeit des Mediums.

Auf diese Weise kann die erfindungsgemäße Messanordnung einfach und sicher eingerichtet werden.

**Bezugszeichenliste**

| 1 | Clamp-On-Ultraschall-Messgerät |
|---|---|
| 2 | Anordnung |
| 2.1 | Referenzanordnung |
| 2.11 | Referenzsignalpfad |
| 2.12 | axialer Referenzabstand |
| 2.13 | erster Winkel |
| 2.2 | Messanordnung |
| 2.21 | Messpfad |
| 2.22 | axialer Anordnungsabstand |
| 2.23 | zweiter Winkel |
| 3.1 | erster Echopfad |
| 10 | Ultraschallwandler |
| 11 | Wandlervorrichtung |
| 11.1 | Kontaktfläche |
| 11.11 | Flächenbereichsschwerpunkt |
| 11.2 | Wandlerlängsachse |
| 11.3 | Piezoelement |
| 12 | Koppelkörper |
| 12.1 | wandlerseitige Koppelfläche |
| 12.2 | messrohrseitige Koppelfläche |
| 13 | Ultraschallsignalfeld |
| 13.1 | erste Längsachse |
| 13.2 | Öffnungswinkel im Medium |
| 20 | Messrohr |
| 21 | Messrohrachse |
| 22 | Messrohrwandung |
| 22.1 | Normale zur Messrohrwandung |
| 30 | elektronische Mess-/Betriebsschaltung |
| 100 | Verfahren zum Einstellen eines Ultraschall-Messgeräts |
| 101 | erster Verfahrensschritt |
| 102 | zweiter Verfahrensschritt |
| 103 | dritter Verfahrensschritt |

**Patentansprüche**

1. Anordnung (2) von Ultraschallwandlern eines Clamp-On-Ultraschall-Messgeräts (1) zum Messen einer Messgröße eines durch ein Messrohr (20) strömenden Mediums umfassend:

zumindest ein Paar auf dem Messrohr angeordnete Ultraschallwandler (10) zum insbesondere wechselseitigen Aussenden und Empfangen von Ultraschallsignalen, wobei die Ultraschallwandler in einer Messanordnung (2.2) bzgl. einer Messrohrachse (21) einen axialen Anordnungsabstand (2.22) zueinander aufweisen,
wobei die Ultraschallwandler jeweils eine Wandlervorrichtung (11) mit einer Wandlerlängsachse (11.2) zum Erzeugen und Erfassen von Ultraschallsignalen sowie einen Koppelkörper (12) zum Übertragen der Ultraschallsignale zwischen Wandlervorrichtung und Messrohr aufweisen,
wobei die Wandlervorrichtungen jeweils mit einem zugehörigen Koppelkörper über eine wandlerseitige Koppelfläche (12.1) des Koppelkörpers akustisch und mechanisch verbunden sind, wobei die Wandlervorrichtungen jeweils eine dem zugehörigen Koppelelement zugewandte Seite mit einem Kontaktflächenbereich (11.1) aufweisen, wobei die Kontaktflächenbereiche jeweils einen Flächenbereichsschwerpunkt (11.11) aufweisen,
wobei eine aussendende Wandlervorrichtung dazu eingerichtet ist, ein Ultraschallsignalfeld (13) zu erzeugen, welches Ultraschallsignalfeld im Koppelkörper eine erste Längsachse (13.1) insbesondere parallel zur Wandlerlängsachse aufweist, wobei das Ultraschallsignalfeld im Medium einen Öffnungswinkel in einer Messrohrlängsschnittsebene (22) durch die Flächenbereichsschwerpunkte aufweist,
wobei die erste Längsachse einen Referenzsignalpfad (2.11) einer Referenzanordnung (2.1) für die Ultraschallwandler definiert und Teil dieses Referenzsignalpfads ist sowie einen Längsachsenwinkel zu einer Normalen (22.1) einer Messrohrwandung (22) aufweist, wobei der Referenzsignalpfad bzgl. der Flächenbereichsschwerpunkte der Ultraschallwandler einen axialen Referenzabstand (2.12) der Referenzanordnung definiert,
wobei in der Messanordnung ein Messpfad (2.21) zwischen den Flächenbereichsschwerpunkten verläuft, wobei der axiale Anordnungsabstand durch die Flächenbereichsschwerpunkte bemessen ist,
wobei die Koppelkörper jeweils über eine messrohrseitige Koppelfläche (12.2) akustisch und mechanisch mit dem Messrohr verbunden sind, wobei der Anordnungsabstand (2.22) kleiner ist als der Referenzabstand (2.12), wobei eine Solldifferenz zwischen Referenzabstand und Anordnungsabstand abhängig ist von zumindest folgendem Merkmal:

Öffnungswinkel des Ultraschallsignalfelds im Medium,
wobei ein Ultraschallsignal Echopfade in der Messrohrwandung (23) bedingt, welche einen gemeinsamen Endpunkt mit dem Referenzsignalpfad aufweisen,
**dadurch gekennzeichnet, dass** ein empfangender Ultraschallwandler (10) in der Messanordnung zumindest einen ersten Echopfad auf einer dem empfangenden Ultraschallwandler zugewandten Seite des Messrohrs mit zwei Reflektionen in der Messrohrwandung und insbesondere mindestens einen zweiten Echopfad mit vier Reflektionen in der Messrohrwandung ausblendet.

2. Anordnung nach Anspruch 1,

wobei der Öffnungswinkel (13.2) im Medium durch einen Amplitudenabfall gegenüber einer Maximalamplitude um 20 Dezibel definiert ist,
wobei der Referenzsignalpfad (2.11) im Medium einen ersten Winkel (2.13) zur Normalen der Messrohrwandung aufweist, wobei der Messpfad (2.21) im Medium einen zweiten Winkel (2.23) zur Normalen der Messrohrwandung aufweist, wobei ein Betrag des zweiten Winkels kleiner ist als der erste Winkel,
wobei eine Winkeldifferenz zwischen dem ersten Winkel und dem zweiten Winkel den Öffnungswinkel multipliziert mit einem Faktor F beträgt,
wobei F höchstens 1.5 und insbesondere höchstens 1.2 und bevorzugt höchstens 1 beträgt.

3. Anordnung nach einem der vorigen Ansprüche, wobei die Solldifferenz mindestens 1 Millimeter und insbesondere mindestens 2 Millimeter und bevorzugt mindestens 3 Millimeter beträgt.

4. Anordnung nach einem der vorigen Ansprüche, wobei der Öffnungswinkel (13.2) des Schallstrahls kleiner ist als 2 Mal der erste Winkel.

5. Anordnung nach einem der vorigen Ansprüche, wobei die Wandlervorrichtung (11) zumindest ein Piezoelement (11.3) aufweist.

6. Anordnung nach einem der vorigen Ansprüche,

wobei der Öffnungswinkel (11.3) im Medium berechenbar ist durch folgende Formel:

$$\text{Ö}=\arcsin(0.87 * W / S)$$

mit W als Wellenlänge einer Zentralfrequenz des Ultraschallsignals im Medium und S Seitenlänge der Wandlervorrichtung in einer Messrohrlängsschnittsebene.

7. Clamp-On-Ultraschall-Messgerät (1) zum Messen einer Messgröße eines in einem Messrohr befindlichen Mediums umfassend:

   eine Anordnung (2) nach einem der vorigen Ansprüche,
   eine elektronische Mess-/Betriebsschaltung (30) zum Betreiben der Ultraschallwandler sowie zum Bereitstellen und Ausgeben von Messwerten der Messgröße.

8. Verfahren (100) zum Einstellen eines Ultraschall-Messgeräts nach Anspruch 7,
   wobei in einem ersten Verfahrensschritt (101) zumindest folgende Größen herangezogen werden, um den Referenzsignalpfad bzw. Referenzabstand zu bestimmen:

   jeweilig zumindest eine Schallgeschwindigkeit von Koppelkörper, Messrohrwandung, Medium, Winkel zwischen erster Längsachse und einer Normalen zur Messrohrwandung, eine Dicke einer Messrohrwandung, ein Durchmesser des Messrohrs, Anzahl von Ultraschallsignaltraversen im Messrohr,
   wobei in einem zweiten Verfahrensschritt (102) zumindest eine der folgenden Größen herangezogen wird, um die Solldifferenz zu bestimmen:

   Öffnungswinkel im Medium,
   wobei in einem dritten Verfahrensschritt (103) die Ultraschallwandler eines Paars gemäß den Ergebnissen des ersten Verfahrensschritts und des zweiten Verfahrensschritts am Messrohr angeordnet werden.

9. Verfahren nach Anspruch 8,
   wobei die elektronische Mess-/Betriebsschaltung (30) den ersten Verfahrensschritt und den zweiten Verfahrensschritt durchführt und einem Bediener Informationen zum Ausführen des dritten Verfahrensschritts bereitstellt.

10. Verfahren nach Anspruch 9,
    wobei der Bediener der elektronischen Mess-/Betriebsschaltung (30) Informationen zum Ausführen des ersten Verfahrensschritts bereitstellt.

## Claims

1. **Arrangement (2) of ultrasonic transducers** of a clamp-on ultrasonic measuring device (1) for measuring a measurement variable of a medium flowing through a measuring tube (20), comprising:

   At least one pair of ultrasonic transducers (10) arranged on the measuring tube, in particular for mutually transmitting and receiving ultrasonic signals, wherein the ultrasonic transducers in a measuring arrangement (2.2) have an axial arrangement distance (2.22) from each other with respect to a measuring tube axis (21), wherein each ultrasonic transducer comprises a transducer device (11) with a transducer longitudinal axis (11.2) for generating and detecting ultrasonic signals, and a coupling body (12) for transmitting the ultrasonic signals between the transducer device and the measuring tube, wherein the transducer devices are acoustically and mechanically connected to a corresponding coupling body via a transducer-side coupling surface (12.1) of the coupling body, and each transducer device has a side facing the corresponding coupling element with a contact surface area (11.1), wherein the contact surface areas each have a surface area centroid (11.11), wherein a transmitting transducer device is configured to generate an ultrasonic signal field (13), which has a first longitudinal axis (13.1) in the coupling body, in particular parallel to the transducer longitudinal axis, and the ultrasonic signal field in the medium has an opening angle in a longitudinal section plane (22) of the measuring tube through the surface area centroids, wherein the first longitudinal axis defines a reference signal path (2.11) of a reference arrangement (2.1) for the ultrasonic transducers and is part of this reference signal path, and has a longitudinal axis angle to a normal (22.1) of a measuring tube wall (22), wherein the reference signal path defines an axial reference distance (2.12) of the reference arrangement with respect to the surface area centroids of the ultrasonic transducers, wherein a measuring path (2.21) runs between the surface area centroids in the measuring arrangement, and the axial arrangement distance is measured by the surface area centroids, wherein the coupling bodies are acoustically and mechanically connected to the measuring tube via a measuring tube-side coupling surface (12.2),

wherein the arrangement distance (2.22) is smaller than the reference distance (2.12), and a target difference between the reference distance and the arrangement distance depends at least on the following feature:

Opening angle of the ultrasonic signal field in the medium,
wherein an ultrasonic signal causes echo paths in the measuring tube wall (23), which have a common endpoint with the reference signal path,
**characterized in that** a receiving ultrasonic transducer (10) in the measuring arrangement suppresses at least a first echo path on a side of the measuring tube facing the receiving ultrasonic transducer with two reflections in the measuring tube wall, and in particular at least one second echo path with four reflections in the measuring tube wall.

2. **Arrangement according to claim 1,**

wherein the opening angle (13.2) in the medium is defined by an amplitude drop of 20 decibels compared to a maximum amplitude, wherein the reference signal path (2.11) in the medium has a first angle (2.13) to the normal of the measuring tube wall, and the measuring path (2.21) in the medium has a second angle (2.23) to the normal of the measuring tube wall, wherein the magnitude of the second angle is smaller than the first angle, wherein a difference between the first and second angles corresponds to the opening angle multiplied by a factor F, wherein F is at most 1.5, in particular at most 1.2, and preferably at most 1.

3. **Arrangement according to one of the preceding claims,**
wherein the target difference is at least 1 millimeter, in particular at least 2 millimeters, and preferably at least 3 millimeters.

4. **Arrangement according to one of the preceding claims,**
wherein the opening angle (13.2) of the sound beam is smaller than 2 times the first angle.

5. **Arrangement according to one of the preceding claims,**
wherein the transducer device (11) comprises at least one piezo element (11.3).

6. **Arrangement according to one of the preceding claims,**

wherein the opening angle (11.3) in the medium is calculable by the following formula:

$$\ddot{O} = \arcsin(0.87 \cdot W/S)$$

with W as the wavelength of a central frequency of the ultrasonic signal in the medium and S as the side length of the transducer device in a longitudinal section plane of the measuring tube.

7. **Clamp-on ultrasonic measuring device (1)** for measuring a measurement variable of a medium in a measuring tube, comprising:

An arrangement (2) according to one of the preceding claims,
An electronic measuring/operating circuit (30) for operating the ultrasonic transducers and for providing and outputting measurement values of the measurement variable.

8. **Method (100) for adjusting an ultrasonic measuring device according to claim 7,**
wherein in a first method step (101) at least the following parameters are used to determine the reference signal path or reference distance:

At least one sound velocity of the coupling body, measuring tube wall, medium,
Angle between the first longitudinal axis and a normal to the measuring tube wall,
thickness of the measuring tube wall, diameter of the measuring tube, number of ultrasonic signal traverses in the measuring tube,
wherein in a second method step (102) at least one of the following parameters is used to determine the target difference:

Opening angle in the medium,
wherein in a third method step (103) the ultrasonic transducers of a pair are arranged on the measuring tube according to the results of the first and second method steps.

9. **Method according to claim 8,**
wherein the electronic measuring/operating circuit (30) performs the first and second method steps and provides the operator with information for executing the third method step.

10. **Method according to claim 9,**
wherein the operator provides the electronic measuring/operating circuit (30) with information for executing the first method step.

## Revendications

1. **Agencement (2) de transducteurs ultrasonores** d'un appareil de mesure ultrasonique clamp-on (1) destiné à mesurer une grandeur de mesure d'un fluide circulant dans un tube de mesure (20), comprenant :

   au moins une paire de transducteurs ultrasonores (10) disposés sur le tube de mesure pour l'émission et la réception mutuelles de signaux ultrasonores, les transducteurs étant disposés dans un agencement de mesure (2.2) avec une distance axiale (2.22) entre eux par rapport à un axe du tube de mesure (21),
   chaque transducteur comprenant un dispositif de transduction (11) avec un axe longitudinal (11.2) pour générer et détecter des signaux ultrasonores, ainsi qu'un corps de couplage (12) pour transmettre les signaux entre le dispositif de transduction et le tube de mesure,
   les dispositifs de transduction étant acoustiquement et mécaniquement reliés à leur corps de couplage respectif via une surface de couplage côté transducteur (12.1),
   chaque dispositif de transduction présentant une surface de contact (11.1) orientée vers l'élément de couplage, avec un centre de gravité de la surface (11.11),
   un dispositif de transduction émetteur étant conçu pour générer un champ de signal ultrasonore (13) ayant un premier axe longitudinal (13.1) dans le corps de couplage, notamment parallèle à l'axe longitudinal du transducteur, le champ de signal dans le fluide présentant un angle d'ouverture dans un plan longitudinal du tube de mesure (22) passant par les centres de gravité des surfaces,
   le premier axe longitudinal définissant un trajet de signal de référence (2.11) d'un agencement de référence (2.1) pour les transducteurs, avec un angle par rapport à une normale (22.1) à la paroi du tube de mesure (22), et une distance axiale de référence (2.12) définie par rapport aux centres de gravité,
   un trajet de mesure (2.21) reliant les centres de gravité dans l'agencement de mesure, la distance axiale étant mesurée entre ces centres,
   les corps de couplage étant acoustiquement et mécaniquement reliés au tube de mesure via une surface de couplage côté tube (12.2),
   la distance d'agencement (2.22) étant inférieure à la distance de référence (2.12), une différence cible entre les deux étant fonction d'au moins :

      l'angle d'ouverture du champ de signal dans le fluide,
      un signal ultrasonore générant des trajets d'écho dans la paroi du tube (23) ayant un point final commun avec le trajet de signal de référence,
      **caractérisé en ce qu'un transducteur récepteur (10)** dans l'agencement de mesure ignore au moins un premier trajet d'écho sur le côté du tube orienté vers le transducteur récepteur avec deux réflexions dans la paroi, et au moins un second trajet d'écho avec quatre réflexions.

2. **Agencement selon la revendication 1,**

   l'angle d'ouverture (13.2) dans le fluide étant défini par une chute d'amplitude de 20 décibels par rapport à l'amplitude maximale,
   le trajet de signal de référence (2.11) ayant un premier angle (2.13) par rapport à la normale à la paroi, le trajet de mesure (2.21) ayant un second angle (2.23), la valeur absolue du second angle étant inférieure au premier,
   une différence angulaire entre les deux étant égale à l'angle d'ouverture multiplié par un facteur F,
   F étant au plus 1,5, notamment au plus 1,2, et de préférence au plus 1.

3. **Agencement selon l'une des revendications précédentes,**
   la différence cible étant d'au moins 1 mm, notamment d'au moins 2 mm, et de préférence d'au moins 3 mm.

4. **Agencement selon l'une des revendications précédentes,**
   l'angle d'ouverture (13.2) du faisceau étant inférieur à deux fois le premier angle.

5. **Agencement selon l'une des revendications précédentes,**
   le dispositif de transduction (11) comprenant au moins un élément piézoélectrique (11.3).

6. **Agencement selon l'une des revendications précédentes,**

   l'angle d'ouverture (11.3) dans le fluide étant calculable selon la formule suivante :

   $$\ddot{O} = \arcsin(0.87 \cdot W/S)$$

   avec W la longueur d'onde de la fréquence centrale du signal ultrasonore dans le fluide, et S la longueur latérale du dispositif de transduction dans un plan longitudinal du tube.

7. **Appareil de mesure ultrasonique clamp-on (1)** pour mesurer une grandeur de mesure d'un fluide dans un tube, comprenant :

un agencement (2) selon l'une des revendications précédentes,
un circuit électronique de mesure/de fonctionnement (30) pour faire fonctionner les transducteurs et fournir les valeurs mesurées.

8. **Procédé (100) de réglage d'un appareil de mesure ultrasonique selon la revendication 7,**

dans une première étape (101), les grandeurs suivantes sont utilisées pour déterminer le trajet de signal de référence et la distance de référence :

vitesses du son dans le corps de couplage, la paroi du tube, le fluide,
angle entre le premier axe longitudinal et la normale à la paroi, épaisseur de la paroi, diamètre du tube, nombre de traversées du signal,
dans une deuxième étape (102), au moins une des grandeurs suivantes est utilisée pour déterminer la différence cible :

angle d'ouverture dans le fluide,
dans une troisième étape (103), les transducteurs sont disposés sur le tube selon les résultats des deux premières étapes.

9. **Procédé selon la revendication 8,**
le circuit électronique (30) exécutant les deux premières étapes et fournissant à l'opérateur les informations nécessaires pour la troisième.

10. **Procédé selon la revendication 9,**
l'opérateur fournissant au circuit électronique (30) les informations nécessaires pour la première étape.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10254053 A1
- US 5546813 A